# EUROPEAN PATENT APPLICATION

(11) **EP 3 974 657 A2**
(43) Date of publication of application: **30.03.2022**
(21) Application number: 21191921.2
(22) Date of filing: 18.08.2021
(51) Int. Cl.: F04D 25/16, F04D 17/16, F04D 25/08, F04D 29/28, F04D 29/30, B23D 47/00, B23Q 11/00, B27B 9/00

(54) **IMPELLER ASSEMBLY AND CUTTING EQUIPMENT PROVIDED WITH IMPELLER ASSEMBLY**

(30) Priority: 29.09.2020 CN 202022181236 U; 29.09.2020 CN 202022184748 U; 20.10.2020 CN 202022335999 U; 03.02.2021 CN 202120307449 U; 01.06.2021 CN 202121207206 U; 01.06.2021 CN 202121207182 U
(71) Applicant: Shanghai Chuanyu Technologies Ltd., Co, Baoshan District Shanghai (CN)
(72) Inventor: ZHENG, Shaoyang, Shanghai (CN); HUANG, Zeyi, SHANGHAI (CN); WANG, Jin, Shanghai (CN)
(74) Representative: Ridderbusch, Oliver

(57) **Abstract**

The present invention provides an impeller assembly and cutting equipment provided with the impeller assembly. Compared with cutting equipment for an external dust cleaner in the prior art, the present invention has a dust suction function and a dust collection function itself, is more convenient to operate in no need of cooperating with an external vacuum cleaner, and thus is applied more widely and not limited by working conditions. By reasonably setting a curvature of each first vane, a first impeller which is in rotation can suck a radial movement of surrounding air along a motor. The first impeller is disposed in the cutting equipment for forming a negative pressure in the cutting equipment, thereby realizing a dust suction function of the cutting equipment. A heat dissipation area of a rotor can be increased by providing a plurality of second impellers on a second impeller, thereby achieving a heat dissipation function of the rotor.

## Description

### TECHNICAL FIELD

The present invention relates to the technical field of cutting equipment, in particular to an impeller assembly and cutting equipment provided with the impeller assembly.

### BACKGROUND ART

The existing electric saws can be classified in various categories according to their sizes, purposes, etc., but almost the same in structure. The existing electric saw usually includes a housing, a power unit and a saw blade, wherein a motor is generally used as the power unit and is arranged at the housing; and the power unit is used to drive the saw blade to rotate to realize the cutting of materials.

In the prior art, in order to prevent sawdust generated in the cutting process of the saw blade from splashing, a saw blade cover is usually disposed outside the saw blade. By providing the saw blade cover, the sawdust can be well prevented from splashing to a user so as to protect the user. However, the function of the saw blade cover in the prior art to prevent the sawdust from splashing only realizes the protection to the user by changing a direction of the sawdust splashing, but the sawdust is still caused to be scattered into a working environment, thereby resulting in a severe working environment.

The current commercially-available cutting machines are mainly divided into two categories: traditional cutting machines and dust-free cutting machines used in cooperation with an external dust cleaner. The traditional cutting machine has the advantages of low price and easy operation, but has the disadvantages of severe pollution, i.e., causes serious air pollution during use, which is not conducive to environmental protection. The dust-free cutting machine used in cooperation with a dust cleaner has the advantage of reducing air pollution during use, but has the disadvantages of high price because it cannot achieve a dust suction function until being used in cooperation with the dust cleaner; and is convenient to operate, limited in working conditions, etc.

### SUMMARY OF THE INVENTION

To overcome the above technical defects, an objective of the present invention is to provide cutting equipment that integrates dust suction, dust collection and heat dissipation.

The present invention discloses an impeller assembly, which is provided on a rotor, the impeller assembly comprises a first impeller and a second impeller; the rotor sequentially passes through the center of the first impeller and the center of the second impeller and is fixedly connected to the first impeller and the second impeller; a plurality of first vanes is convexly provided on the first impeller, and arranged in a circumferential direction of the rotor; a plurality of second vanes is provided on the second impeller and arranged in a circumferential direction of the rotor; each first vane comprises an inner vane segment and an outer vane segment that are connected, wherein a distance from a protrusion on the first impeller to the first impeller is a height of the vane, and a vane height of the outer vane segment is greater than a vane height of the inner vane segment; and when the rotor rotates, the first impeller sucks a radial circulation of ambient air along the rotor, and a contact area between the rotor and air is increased by the connection of the plurality of the second vanes and the rotor.

Preferably, a circle formed by the inner vane segments on the first impeller has a diameter of Φ₁, and the first impeller has a diameter of Φ₂, where 1/8Φ₂≤Φ₁≤7/8Φ₂.

Preferably, the vane heights of the outer vane segments are the same, the vane heights of the inner vane segments gradually decrease in a direction facing the rotor, and an angle β between a connecting line from a highest point to a lowest point of each inner vane segment and the first impeller is: 15°<β<75°.

Preferably, a vane height of each outer vane segment is H, where 5cm≤H≤1/3Φ₂, or 5cm≤H≤25cm.

Preferably, each of the first vanes and the second vanes comprises a proximal end connected to the rotor and a distal end connected to the edge of a wheel disc, and a first spacing distance between the distal ends of each two adjacent first vanes is 1/5-1/30 of the perimeter of the wheel disc; and a second spacing distance between the distal ends of each two adjacent second vanes is 1/10-1/40 of the perimeter of the wheel disc.

Preferably, each first vane has a circular arc shape or a spiral shape; when the first vane has the circular arc shape, a connecting line between a tangent line of the first vane and the center of the first impeller is a vane tangent line, a connecting line between the distal end of the first vane and the center of the first impeller is a reference line, and an included angle α between the vane tangent line and the reference line is: 5°≤α≤60°.

Preferably, each second vane has a linear shape or a circular arc shape or a spiral shape; and when the second vane has the linear shape, a radial length of the second vane along the second impeller is 1/10-1 of the radius of the second impeller, i.e., between 10% and 100% of the radius of the second impeller.

Preferably, each first vane and the first impeller, and each second vane and the second impeller are arranged vertically or non-vertically; and when they are arranged non-vertically, a mounting angle β1 between the first vane and the first impeller is: 60°<β≤90°; and a mounting angle β2 between the second vane and the second impeller is: 45°≤β2<90°.

Preferably, each of the first impeller and the second impeller is provided with ventilation openings; each ventilation opening is ring-shaped, and the ring-shaped ventilation openings are concentric with the wheel disc; each of the first impeller and the second impeller is divided into a central disc and an outer ring disc, wherein the distal end of the vane is provided on the outer ring disc; and an inner diameter of the outer ring disc is Ri, and a diameter of each of the first impeller and the second impeller is R₂, where R₁ ≦ 3/4R₂.

Preferably, a plurality of connecting bars is provided between the central disc and the outer ring disc, and a radial size of each connecting bar is less than 1/3 of the gap.

Preferably, a height H of each vane is: 1/8R₂ ≦ H ≦ 1/3R₂, and a height of the vane at the proximal end is smaller than the height of the vane at the distal end.

The present invention also discloses a cutting equipment, comprising a housing, the impeller assembly is provided in the housing.

Preferably, comprising a dust suction cavity, a motor cavity and a cutting cavity, the rotor penetrates through the dust suction cavity, the motor cavity and the cutting cavity; a drive motor is provided in the motor cavity, and is connected to the rotor to drive the rotor to rotate; the first impeller is provided in the dust suction cavity, the second impeller is provided in the motor cavity, and the first impeller and the second impeller are respectively provided on both sides or the same side of the motor; the rotor rotates to drive the impeller assembly to rotate so as to form a negative pressure in the dust suction cavity, and the cutting cavity is communicated with the dust suction cavity through a dust suction pipeline; and a dust collection channel is detachably connected to a side of the dust suction cavity away from the cutting cavity, or to the dust suction pipeline; a filter screen is provided in the dust collection channel; air sucked from the cutting cavity is discharged through the dust collection channel, while dust is blocked by the filter screen and stays in the dust collection channel.

Preferably, the dust collection channel comprises a dust collection space and an air outlet space, the dust collection space is provided between the dust suction cavity and the air outlet space, and the filter screen is provided in the dust collection space; the dust collection space is detachably connected to the dust suction cavity; and air sucked from the cutting cavity passes through the dust collection space and is discharged from the air outlet space, while dust is blocked by the filter screen and stays in the dust collection space.

Preferably, a fixing plate is provided between the motor cavity and the dust suction cavity, and a plurality of connecting members is provided on the fixing plate; and a housing of the motor cavity, the fixing plate and a housing of the dust suction cavity are connected by the plurality of the connecting members.

Preferably, the fixing plate has the same shape and size as those of a radial section of each the motor cavity and the dust suction cavity; and the fixing plate comprises a central opening area and a ring-shaped connecting area, wherein the opening area penetrates through the rotor, and the plurality of the connecting pieces is equidistantly provided on the connecting area in a circumferential direction.

Preferably, the dust suction pipeline is arranged along the surface of the housing of the cutting equipment and passes through the fixing plate.

Preferably, the cutting cavity comprises a protective cover and a saw blade provided in the protective cover; the protective cover is provided with a cutting opening, wherein a part of the saw blade is provided in the protective cover, and the other part of the saw blade is exposed outside the cutting opening; and the protective cover comprises a first protective portion and a second protective portion, wherein the second protective portion is movably connected to the first protective portion, and the second protective portion rotates in a circumferential direction of the saw blade relative to the first protective portion to change an overlap area between the first protective portion and the second protective portion, thereby changing a size of the cutting opening.

Preferably, one end of the dust suction pipeline is provided on the second protective portion; the dust suction pipeline is a curved flexible pipeline, and the second protective portion rotates to drive one end of the dust suction pipeline to move; or the dust suction pipeline is a flexible pipeline, and the second protective portion rotates to change a size of the dust suction pipeline.

Preferably, the protective cover comprises an axial mounting surface and a radial mounting surface; and the axial mounting surface and the radial mounting surface are adjustably connected through an adjusting member to change an axial thickness of the protective cover.

Preferably, the saw blade is fixed on a rotating shaft, the rotating shaft being connected to the rotor through a gear set; the rotor rotates to drive the rotating shaft to rotate, thereby driving the saw blade to rotate; and the rotating shaft is arranged vertical to or parallel to the rotor.

Preferably, the housing of the motor cavity is further provided with a plurality of heat dissipating holes in a circumferential direction, and the positions of the plurality of heat dissipating holes correspond to the position of the impeller assembly.

Preferably, a first handle is provided on the housing of the cutting cavity; and the first handle is provided in a radial direction of the cutting cavity; the first handle comprises a supporting plate, and the supporting plate is provided to face the cutting opening.

Preferably, a second handle is provided on the housing of the cutting cavity; the second handle is provided in a radial direction of the motor cavity, and two ends of the second handle are connected to the housing; and the second handle comprises two holding members arranged in an axial direction, and a distance between the two holding members is greater than 1/4 of an axial size of the motor cavity.

Preferably, carbon brushes are further provided on the rotor; the two carbon brushes are provided in the motor cavity and arranged to face each other on the rotor; and the housing is further provided with carbon brush holes from which the carbon brushes are exposed out of the housing

Preferably, a dust collection container is connected to the air outlet space, and the dust collection container is a dust collection box or a dust collection bag.

After the above technical solutions are adopted, compared with the prior art, the present invention has the following technical effects:
1. by reasonably setting a curvature of each first vane, a first impeller which is in rotation can suck a radial movement of surrounding air along a motor; the first impeller is disposed in the cutting equipment to form a negative pressure in the cutting equipment, thereby realizing a dust suction function of the cutting equipment;
2. a heat dissipation area of the rotor can be increased by providing a plurality of second vanes on the second impeller, thereby achieving a heat dissipation function of the rotor; the novel impeller assembly can provide dust suction and heat dissipation functions at the same time when the rotor rotates, without occupying any internal space of the housing;
3. by setting the first vanes to be non-vertical to the first impeller, an wind force can be increased, and a better dust suction effect can be achieved in the cutting equipment;
4. by gradually reducing the vane heights of the inner vane segments in a direction facing the rotor, when the first impeller rotates, a vortex may be formed on the first impeller, which increases a suction force of the first impeller;
5. by providing the ventilation openings, air flows more intensively and a dust suction effect is more obvious;
6. the central disc is connected to the outer ring disc through the connecting bars, which prevents the structural instability caused by only depending on the connection of the vanes;
7. since a large reverse thrust will be often produced and a force is hardly applied with a single hand when a target object having a high resistance to the ground, a wall or the like is cut, by providing the first handle, it is easier to apply a pressure to the ground or the wall by means of the first handle during cutting, which is helpful for smooth cutting work;
8. the second handle arranged in a radial direction of the housing is more labor-saving and more convenient to use relative to the axial arrangement;
9. when the impeller assembly is provided in both the dust suction cavity and the motor cavity, and the equipment operates, and the impeller assemblies on both sides of the motor will affect a dynamic balance of the motor; by providing the fixing plate, the stability in the connection between the motor cavity and the dust suction cavity is strengthened, and the jitter during operation of the equipment is reduced; the noise is reduced, and the service life of the motor is prolonged; the fixing plate has the same shape and size as those of a radial section of the motor cavity and a radial section of the dust suction cavity, so that the force transmission between the dust suction cavity and the motor cavity completely passes through the fixing plate, and is then reinforced by the fixing plate, which makes the connection between the motor cavity and the dust suction cavity more stable; and the dust suction pipeline is provided to pass through the fixing plate, which reduces the vibration of the dust suction pipeline;
10. by setting the rotatable protective cover, a multi-angle and multi-area selection of a method for operating the cutting equipment is realized to meet the needs of different operators' heights and usage habits, and is more user-friendly; and
11. compared with the cutting equipment of the prior art used in cooperation with an external vacuum cleaner, the cutting equipment of the present invention itself has a dust suction function and a dust collection function, without the need to cooperate with any external vacuum cleaner, and thus is more convenient to operate, applied more widely, and not restricted by working conditions; in addition, the economic efficiency of the cutting equipment of the present invention is far greater than that of cutting equipment used in cooperation with the external vacuum cleaner; and the filter screen prevents dust from entering the motor to affect the equipment.

### BRIEF DESCRIPTION OF THE DRAWINGS

FIG. 1 is a schematic diagram of an overall structure of a first embodiment of an impeller assembly provided by the present invention;
FIG. 2 is a stereogram of a first impeller of the first embodiment of the impeller assembly provided by the present invention;
FIG. 3 is a main view of the first impeller of the first embodiment of the impeller assembly provided by the present invention;
FIG. 4 is a schematic structural diagram of a second embodiment of the impeller assembly provided by the present invention;
FIG. 5 is a schematic structural diagram of a third embodiment of the impeller assembly provided by the present invention;
FIG. 6 is a first exploded view of a fifth embodiment of cutting equipment provided by the present invention;
FIG. 7 is a second exploded view of the fifth embodiment of the cutting equipment provided by the present invention;
FIG. 8 is a schematic diagram of an overall structure of the fifth embodiment of the cutting equipment provided by the present invention;
FIG. 9 is a schematic structural diagram of a motor cavity of the fifth embodiment of the cutting equipment provided by the present invention;
FIG. 10 is an exploded view of the motor cavity of the fifth embodiment of the cutting equipment provided by the present invention;
FIG. 11 is an exploded view of a dust suction cavity of the fifth embodiment of the cutting equipment provided by the present invention;
FIG. 12 is a schematic structural diagram of a cutting cavity of the fifth embodiment of the cutting equipment provided by the present invention;
FIG. 13 is a schematic structural diagram of a cutting cavity cover plate of the fifth embodiment of the cutting equipment provided by the present invention;
FIG. 14 is a schematic structural diagram of a fixing plate of the fifth embodiment of the cutting equipment provided by the present invention;
FIG. 15 is a schematic structural diagram of a dust suction cavity sealing plate of the fifth embodiment of the cutting equipment provided by the present invention;
FIG. 16 is an exploded view of a sixth embodiment of the cutting equipment provided by the present invention;
FIG. 17 is a stereogram of the sixth embodiment of the cutting equipment provided by the present invention;
FIG. 18 is a sectional view of the sixth embodiment of the cutting equipment provided by the present invention;
FIG. 19 is an internal structural diagram of the sixth embodiment of the cutting equipment provided by the present invention;
FIG. 20 is an exploded view of a main view of a seventh embodiment of the cutting equipment provided by the present invention;
FIG. 21 is an exploded view of the seventh embodiment of the cutting equipment provided by the present invention, in a direction which is different from FIG. 20;
FIG. 22 is a main view of the seventh embodiment of the cutting equipment provided by the present invention;
FIG. 23 is an exploded view along a direction A of a main view of the seventh embodiment of the cutting equipment provided by the present invention;
FIG. 24 is a left view of the seventh embodiment of the cutting equipment provided by the present invention;
FIG. 25 is a rear view of the seventh embodiment of the cutting equipment provided by the present invention;
FIG. 26 is a top view of the seventh embodiment of the cutting equipment provided by the present invention; and
FIG. 27 is a stereogram of the seventh embodiment of the cutting equipment provided by the present invention.

In drawings, reference symbols represent the following components: 1-first impeller; 2-first vane; 3-second impeller; 4-second vane; 5-motor; 6-ventilation opening; 7-saw blade; 8-carbon brush; 9-bearing; 10-heat dissipating hole; 11-motor cavity; 12-second handle; 13-carbon brush holder; 14-depth adjusting switch; 15-cutting cavity; 16-gear set; 17-first handle; 18-cutting cavity cover plate; 19-fixing bolt; 20- fixing block; 21-vane fixing block; 22-dust suction cavity; 23-circlip; 24-cutting depth adjusting module; 25-mounting bottom plate; 26-cutting angle adjusting module; 27-angle adjusting switch; 28 -dust suction pipeline; 29-fixing plate; 30-carbon brush hole; 31-dust suction port; 32-dust suction cavity cover plate; 33-dust suction cavity bottom plate; 34-dust suction cavity sealing plate; 35-dust collection portion; 36-air outlet portion; 37-power line sleeve; 38-filter screen; 39- first protective portion; 40-second protective portion; 41-dust discharge pipeline; 42-power line; 43-third handle; 44-rotating shaft.

### DETAILED DESCRIPTION

The advantages of the present invention are further described hereinafter with reference to the drawings and the specific embodiments.

The exemplary embodiments are described in detail herein, and are illustratively shown in the drawings. When the following description refers to the drawings, unless otherwise indicated, the same numbers in different drawings indicate the same or similar elements. The embodiments described in the following exemplary embodiments do not represent all embodiments consistent with the present disclosure. On the contrary, they are merely examples of devices and methods consistent with some aspects of the present disclosure described in detail in the appended claims.

The terms used in the present disclosure are for the purpose of describing particular embodiments only and are not intended to limit the present disclosure. The singular forms of "a", "said" and "the" used in the present disclosure and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in the present disclosure, the information should not be limited to these terms. These terms are only used to distinguish the information of the same type from each other. For example, the first information can also be referred to as the second information, and similarly, the second information can also be referred to as the first information without departing from the scope of the present disclosure. Depending on the context, the word "if" used herein can be explained as "in the case of", "when" or "in response to determine".

In the description of the present invention, it should be understood that the orientation or position relation indicated by the terms "longitudinal", "lateral", "upper", "lower", "front", "rear", "left", "right", "vertical", "horizontal", "top", "bottom", "inside", "outside" and the like is based on the orientation or position relation shown in the drawings, which is only used for convenience of description of the present invention and simplification of description instead of indicating or implying that the indicated device or element must have a specific orientation, and be constructed and operated in a specific orientation, and thus should not be understood as a limitation to the present invention.

In the description of the present invention, the terms "installation", "connected" and "connection" should be understood in broad sense unless otherwise specified and defined. For example, they can be mechanical connection or electrical connection, can also be connected inside two components, can be directly connected, and can also be indirectly connected through an intermediate medium. The specific meanings of the above terms can be understood in a specific case by those of ordinary skills in the art.

In the following description, the postfixes such as "module", "component" or "unit" used to indicate elements are only used to facilitate the description of the present invention and have no specific meanings in themselves. Therefore, the "module" and "component" can be used in a mixed way.

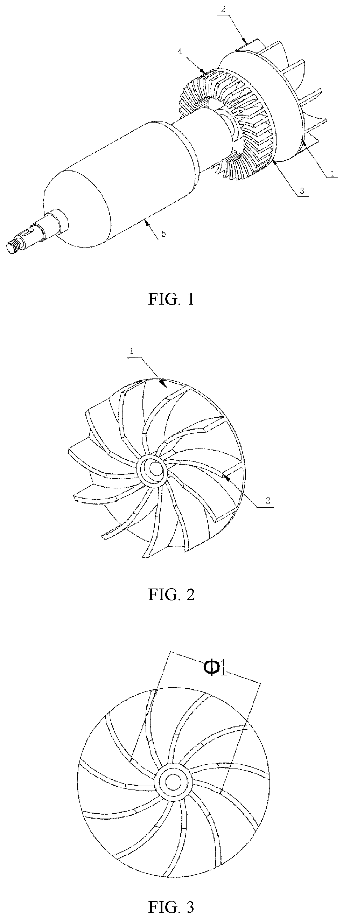

Referring to FIGS. 1-3, the present invention provides a first embodiment of an impeller assembly. In this embodiment, the impeller assembly is provided on a rotor and includes:
- a first impeller, wherein the rotor passes through the center of the first impeller and is fixedly connected to the first impeller, and the rotor rotates to drive the first impeller to rotate;
- a plurality of second vanes 2, wherein the plurality of first vanes 2 is convexly provided on the first impeller, and arranged around a circumferential direction of the rotor, and an impeller set is convexly formed on the first impeller; the first impeller which is in rotation sucks a radial circulation of ambient air along the rotor; each first vane 2 includes an inner vane segment and an outer vane segment that are connected, wherein a distance from a protrusion on the first impeller to the first impeller is a height of the vane, and a vane height of the outer vane segment is greater than a vane height of the inner vane segment; when the first impeller rotates, a vortex may be formed on the first impeller to increase a suction force of the first impeller;
- a second impeller 3, wherein the rotor passes through the center of the second impeller 3 and is fixedly connected to the second impeller 3, and the rotor rotates to drive the second impeller 3 to rotate; and
- a plurality of second vanes 4, wherein the plurality of second vanes 4 is provided on the second impeller 3, and arranged around the circumferential direction of the rotor, and an contact area between the rotor and air is increased by the connection between the plurality of second vanes 4 and the rotor.

A circle formed by the inner vane segments on the first impeller has a diameter of Φ₁, and the first impeller has a diameter of Φ₂, where 1/8Φ₂≤Φ₁≤7/8Φ₂, preferably 1/6Φ₂≤Φ₁≤3/4Φ₂, more preferably 1/5Φ₅≤Φ₁≤1/3Φ₂. In actual design, the relationship between Φ₁ and Φ₂ is a ratio of the inner vane segment to the entire wheel disc. The ratio of the inner vane segment to the entire wheel disc is adjusted to obtain an actually required suction force.

The vane heights of the outer vane segments are the same, the vane heights of the inner vane segments gradually decrease in a direction facing the rotor, and an angle β between a connecting line from a highest point to a lowest point of each inner vane segment and the first impeller is: 15°<β<75°. In the actual implementation process, the angle β is adjusted according to the required suction force.

The height of each outer vane segment is H, where 5cm≤H≤1/3Φ₂, or 5cm≤H≤25cm. In the actual implementation process, the vane height of the outer vane segment is adjusted to H so as to obtain a required wind force.

A motor 5 is further provided on the rotor. The first impeller and the second impeller 3 are arranged on the same side of the motor 5.

Each of the first vanes 2 includes a proximal end connected to the rotor and a distal end connected to the edge of the wheel disc, and a first spacing distance between the distal ends of each two adjacent first vanes 2 is 1/5-1/30 of the perimeter of the wheel disc. In the present embodiment, the number of the first vanes 2 is 11, and the first spacing distance is 1/11, which can ensure that a sufficient wind force can be formed after the first impeller rotates. In other embodiments, a gap between the distal ends of each two adjacent first vanes 2 can be adjusted according to the actual required wind force.

Each of the second vanes 4 also includes a proximal end connected to the rotor and a distal end connected to the edge of the wheel disc, and a second spacing distance between the distal ends of each two adjacent second vanes 4 is 1/10-1/40 of the perimeter of the wheel disc. In the present embodiment, the second spacing distance between the distal ends of each two adjacent second vanes 4 is 1/30 of the perimeter of the wheel disc, which can provide a sufficient heat dissipating area for the second impeller 3. In other embodiments, the distance between the distal ends of each two adjacent second vanes 4 can be set according to the comprehensive consideration of the thickness and length of the second vanes 4.

Each first vane 2 has a circular arc shape or a spiral shape. When the first vane has the circular arc shape, a connecting line between a tangent line of the first vane 2 and the center of the first impeller is a vane tangent line, a connecting line between the distal end of the first vane 2 and the center of the first impeller is a reference line, and an included angle α between the vane tangent line and the reference line is: 5°≤α≤60°. In other embodiments, each first vane 2 may also have a spiral shape. The purpose here is to generate a wind force at the first impeller, and the shape of the vanes is not limited.

Each second vane 4 has a linear shape or a circular arc shape or a spiral shape. When the second vane has the linear shape, a radial length of the second vane 4 along the second impeller 3 is 1/10-1 of the radius of the second impeller 3.

In the present embodiment, each second vane 4 has a linear shape, and a radial length of the second vane 4 along the second impeller 3 is 1/2 of the radius of the second impeller 3. In other embodiments, each second vane 4 has a circular arc shape or a spiral shape. The purpose here is also to increase a heat dissipating area of the rotor, and the shape of the second vanes 4 is not limited. If a circular arc shape or a spiral shape of the vanes can achieve a better heat dissipating effect, the vanes that have a circular arc shape or a spiral shape can also be used. Moreover, in other embodiments, the radial length of each second vane 4 along the second impeller 3 can also be set to other values. The purpose here is also to meet a requirement for a heat dissipating area, which is not limited herein.

Each first vane 2 and the first impeller are arranged vertically or non-vertically; and when the first vane 2 and the first impeller are arranged non-vertically, a mounting angle β₁ therebetween is: 60°<β≤90°. In the present embodiment, the first vane 2 and the first impeller are arranged vertically, such that the manufacturing cost will be lower, the production is simple, and a mold can be used for once molding. In other embodiments, the first vane 2 and the first impeller may be arranged non-vertically, and a mounting angle therebetween is not limited in the case of satisfying the wind force of the first impeller.

Each second vane 4 and the second impeller 3 are arranged vertically. In other embodiments, each second vane 4 and the second impeller 3 may also be arranged non-vertically; and a mounting angle β₂ between the second vane 4 and the second impeller 3 is: 45°≤β₂<90°.

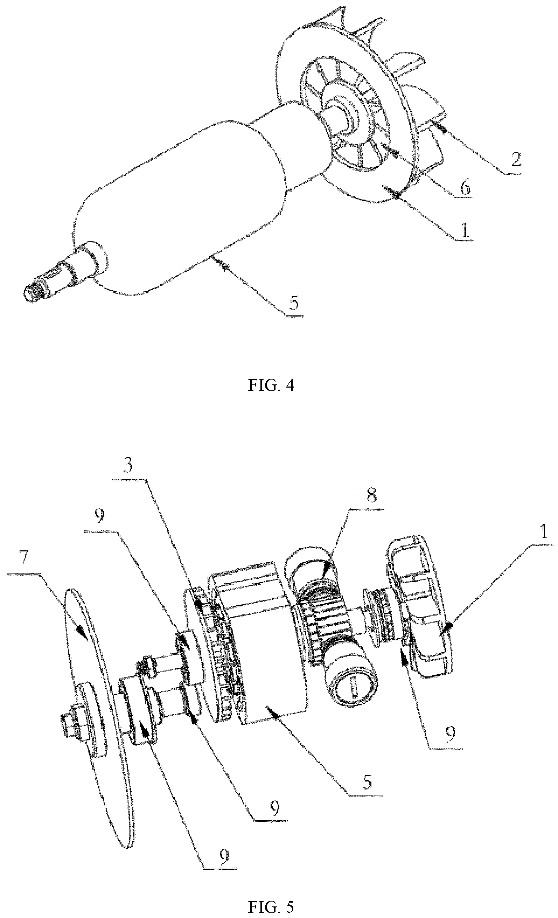

Referring to FIG. 4, the present invention provides a second embodiment of an impeller assembly. In this embodiment, the impeller assembly is provided on a rotor and includes:
- a first impeller, wherein the rotor passes through the center of the first impeller and is fixedly connected to the first impeller, and the rotor rotates to drive the first impeller to rotate;
- a plurality of second vanes 2, wherein the plurality of first vanes 2 is convexly provided on the first impeller, and arranged around a circumferential direction of the rotor, and an impeller set is convexly formed on the first impeller; the first impeller which is in rotation sucks a radial circulation of ambient air along the rotor; each first vane 2 includes an inner vane segment and an outer vane segment that are connected, wherein a distance from a protrusion on the first impeller to the first impeller is a height of the vane, and a vane height of the outer vane segment is greater than a vane height of the inner vane segment; when the first impeller rotates, a vortex may be formed on the first impeller to increase a suction force of the first impeller;
- a second impeller 3, wherein the rotor passes through the center of the second impeller 3 and is fixedly connected to the second impeller 3, and the rotor rotates to drive the second impeller 3 to rotate; and
- a plurality of second vanes 4, wherein the plurality of second vanes 4 is provided on the second impeller 3, and arranged around the circumferential direction of the rotor, and an contact area between the rotor and air is increased by the connection between the plurality of second vanes 4 and the rotor.

A circle formed by the inner vane segments on the first impeller has a diameter of Φ₁, and the first impeller has a diameter of Φ₂, where 1/8Φ₂≤Φ₁≤7/8Φ₂, preferably 1/6Φ₂≤Φ₁≤3/4Φ₂, more preferably 1/5Φ₂≤Φ₁≤1/3Φ₂. In actual design, the relationship between Φ₁ and Φ₂ is a ratio of the inner vane segment to the entire wheel disc. The ratio of the inner vane segment to the entire wheel disc is adjusted to obtain an actually required suction force.

The vane heights of the outer vane segments are the same, the vane heights of the inner vane segments gradually decrease in a direction facing the rotor, and an angle β between a connecting line from a highest point to a lowest point of each inner vane segment and the first impeller is: 15°<β<75°. In the actual implementation process, the angle β is adjusted according to the required suction force.

The height of each outer vane segment is H, where 5cm≤H≤1/3Φ₂, or 5cm≤H≤25cm. In the actual implementation process, the vane height of the outer vane segment is adjusted to H so as to obtain a required wind force.

A motor 5 is further provided on the rotor. The first impeller and the second impeller 3 are arranged on the same side of the motor 5.

Each of the first vanes 2 includes a proximal end connected to the rotor and a distal end connected to the edge of the wheel disc, and a first spacing distance between the distal ends of each two adjacent first vanes 2 is 1/5-1/30 of the perimeter of the wheel disc. In the present embodiment, the number of the first vanes 2 is 11, and the first spacing distance is 1/11, which can ensure that a sufficient wind force can be formed after the first impeller rotates. In other embodiments, a gap between the distal ends of each two adjacent first vanes 2 can be adjusted according to the actual required wind force.

Each of the second vanes 4 also includes a proximal end connected to the rotor and a distal end connected to the edge of the wheel disc, and a second spacing distance between the distal ends of each two adjacent second vanes 4 is 1/10-1/40 of the perimeter of the wheel disc. In the present embodiment, the second spacing distance between the distal ends of each two adjacent second vanes 4 is 1/30 of the perimeter of the wheel disc, which can provide a sufficient heat dissipating area for the second impeller 3. In other embodiments, the distance between the distal ends of each two adjacent second vanes 4 can be set according to the comprehensive consideration of the thickness and length of the second vanes 4.

Each first vane 2 has a circular arc shape or a spiral shape. When the first vane has the circular arc shape, a connecting line between a tangent line of the first vane 2 and the center of the first impeller is a vane tangent line, a connecting line between the distal end of the first vane 2 and the center of the first impeller is a reference line, and an included angle α between the vane tangent line and the reference line is: 5°≤α≤60°. In other embodiments, each first vane 2 may also have a spiral shape. The purpose here is to generate a wind force at the first impeller, and the shape of the vanes is not limited.

Each second vane 4 has a linear shape or a circular arc shape or a spiral shape. When the second vane has the linear shape, a radial length of the second vane 4 along the second impeller 3 is 1/10-1 of the radius of the second impeller 3.

In the present embodiment, each second vane 4 has a linear shape, and a radial length of the second vane 4 along the second impeller 3 is 1/2 of the radius of the second impeller 3. In other embodiments, each second vane 4 has a circular arc shape or a spiral shape. The purpose here is also to increase a heat dissipating area of the rotor, and the shape of the second vanes 4 is not limited. If a circular arc shape or a spiral shape of the vanes can achieve a better heat dissipating effect, the vanes that have a circular arc shape or a spiral shape can also be used. Moreover, in other embodiments, the radial length of each second vane 4 along the second impeller 3 can also be set to other values. The purpose here is also to meet a requirement for a heat dissipating area, which is not limited herein.

Each first vane 2 and the first impeller are arranged vertically or non-vertically; and when the first vane 2 and the first impeller are arranged non-vertically, a mounting angle β₁ therebetween is: 60°<β≤90°. In the present embodiment, the first vane 2 and the first impeller are arranged vertically, such that the manufacturing cost will be lower, the production is simple, and a mold can be used for once molding. In other embodiments, the first vane 2 and the first impeller may be arranged non-vertically, and a mounting angle therebetween is not limited in the case of satisfying the wind force of the first impeller.

Each second vane 4 and the second impeller 3 are arranged vertically. In other embodiments, each second vane 4 and the second impeller 3 may also be arranged non-vertically; and a mounting angle β₂ between the second vane 4 and the second impeller 3 is: 45°≤β₂<90°.

Ventilation openings 6 are formed in each of the first impeller and the second impeller 3; the ventilation openings 6 are arranged annularly, and the annular ventilation openings 6 are concentric with the wheel disc; each of the first impeller and the second impeller 3 is divided into a central disc and an outer ring disc, and the distal end of each vane is provided on the outer ring disc; the outer ring disc has an inner diameter of Ri, and each of the first impeller and the second impeller 3 has a diameter of R₂, where R₁≦3/4R₂.

A height H of each vane is: 1/8R₂ ≦H≦1/3R₂, and a height of the vane at the proximal end is smaller than the height of the vane at the distal end.

A plurality of connecting bars is provided between the central disc and the outer ring disc, and a radial size of each connecting bar is less than 1/3 of the gap.

Referring to FIG. 5, the present invention provides a third embodiment of an impeller assembly. In this embodiment, the impeller assembly is provided on a rotor and includes:
- a first impeller, wherein the rotor passes through the center of the first impeller and is fixedly connected to the first impeller, and the rotor rotates to drive the first impeller to rotate;
- a plurality of second vanes 2, wherein the plurality of first vanes 2 is convexly provided on the first impeller, and arranged around a circumferential direction of the rotor, and an impeller set is convexly formed on the first impeller; the first impeller which is in rotation sucks a radial circulation of ambient air along the rotor; each first vane 2 includes an inner vane segment and an outer vane segment that are connected, wherein a distance from a protrusion on the first impeller to the first impeller is a height of the vane, and a vane height of the outer vane segment is greater than a vane height of the inner vane segment; when the first impeller rotates, a vortex may be formed on the first impeller to increase a suction force of the first impeller;
- a second impeller 3, wherein the rotor passes through the center of the second impeller 3 and is fixedly connected to the second impeller 3, and the rotor rotates to drive the second impeller 3 to rotate; and
- a plurality of second vanes 4, wherein the plurality of second vanes 4 is provided on the second impeller 3, and arranged around the circumferential direction of the rotor, and an contact area between the rotor and air is increased by the connection between the plurality of second vanes 4 and the rotor.

A circle formed by the inner vane segments on the first impeller has a diameter of Φ₁, and the first impeller has a diameter of Φ₂, where 1/8Φ₂≤Φ₁≤7/8Φ₂, preferably 1/6Φ₂≤Φ₁≤3/4Φ₂, more preferably 1/5Φ₂≤Φ₁≤1/3Φ₂. In actual design, the relationship between Φ₁ and Φ₂ is a ratio of the inner vane segment to the entire wheel disc. The ratio of the inner vane segment to the entire wheel disc is adjusted to obtain an actually required suction force.

The vane heights of the outer vane segments are the same, the vane heights of the inner vane segments gradually decrease in a direction facing the rotor, and an angle β between a connecting line from a highest point to a lowest point of each inner vane segment and the first impeller is: 15°<β<75°. In the actual implementation process, the angle β is adjusted according to the required suction force.

The height of each outer vane segment is H, where 5cm≤H≤1/3Φ₂, or 5cm≤H≤25cm. In the actual implementation process, the vane height of the outer vane segment is adjusted to H so as to obtain a required wind force.

The first impeller and the second impeller 3 may be arranged on different sides of the motor 5, respectively. It is worth noting that when the impeller assembly is applied to the cutting equipment, a blade is provided at one end of the rotor; and when the first impeller and the second impeller 3 are provided on the same side of the motor 5, they can be provided at the end of the rotor where the blade is provided, or the end of the rotor where no blade is provided.

Each of the first vanes 2 includes a proximal end connected to the rotor and a distal end connected to the edge of the wheel disc, and a first spacing distance between the distal ends of each two adjacent first vanes 2 is 1/5-1/30 of the perimeter of the wheel disc. In the present embodiment, the number of the first vanes 2 is 11, and the first spacing distance is 1/11, which can ensure that a sufficient wind force can be formed after the first impeller rotates. In other embodiments, a gap between the distal ends of each two adjacent first vanes 2 can be adjusted according to the actual required wind force.

Each of the second vanes 4 also includes a proximal end connected to the rotor and a distal end connected to the edge of the wheel disc, and a second spacing distance between the distal ends of each two adjacent second vanes 4 is 1/10-1/40 of the perimeter of the wheel disc. In the present embodiment, the second spacing distance between the distal ends of each two adjacent second vanes 4 is 1/30 of the perimeter of the wheel disc, which can provide a sufficient heat dissipating area for the second impeller 3. In other embodiments, the distance between the distal ends of each two adjacent second vanes 4 can be set according to the comprehensive consideration of the thickness and length of the second vanes 4.

Each first vane 2 has a circular arc shape or a spiral shape. When the first vane has the circular arc shape, a connecting line between a tangent line of the first vane 2 and the center of the first impeller is a vane tangent line, a connecting line between the distal end of the first vane 2 and the center of the first impeller is a reference line, and an included angle α between the vane tangent line and the reference line is: 5°≤α≤60°. In other embodiments, each first vane 2 may also have a spiral shape. The purpose here is to generate a wind force at the first impeller, and the shape of the vanes is not limited.

Each second vane 4 has a linear shape or a circular arc shape or a spiral shape. When the second vane has the linear shape, a radial length of the second vane 4 along the second impeller 3 is 1/10-1 of the radius of the second impeller 3.

In the present embodiment, each second vane 4 has a linear shape, and a radial length of the second vane 4 along the second impeller 3 is 1/2 of the radius of the second impeller 3. In other embodiments, each second vane 4 has a circular arc shape or a spiral shape. The purpose here is also to increase a heat dissipating area of the rotor, and the shape of the second vanes 4 is not limited. If a circular arc shape or a spiral shape of the vanes can achieve a better heat dissipating effect, the vanes that have a circular arc shape or a spiral shape can also be used. Moreover, in other embodiments, the radial length of each second vane 4 along the second impeller 3 can also be set to other values. The purpose here is also to meet a requirement for a heat dissipating area, which is not limited herein.

Each first vane 2 and the first impeller are arranged vertically or non-vertically; and when the first vane 2 and the first impeller are arranged non-vertically, a mounting angle β₁ therebetween is: 60°<β≤90°. In the present embodiment, the first vane 2 and the first impeller are arranged vertically, such that the manufacturing cost will be lower, the production is simple, and a mold can be used for once molding. In other embodiments, the first vane 2 and the first impeller may be arranged non-vertically, and a mounting angle therebetween is not limited in the case of satisfying the wind force of the first impeller.

Each second vane 4 and the second impeller 3 are arranged vertically. In other embodiments, each second vane 4 and the second impeller 3 may also be arranged non-vertically; and a mounting angle β₂ between the second vane 4 and the second impeller 3 is: 45°≤β₂<90°.

The present invention further provides a fourth embodiment of an impeller assembly. This embodiment is structurally similar to the third embodiment just in that: ventilation openings 6 are provided on the basis of the third embodiment, which is not repeated here.

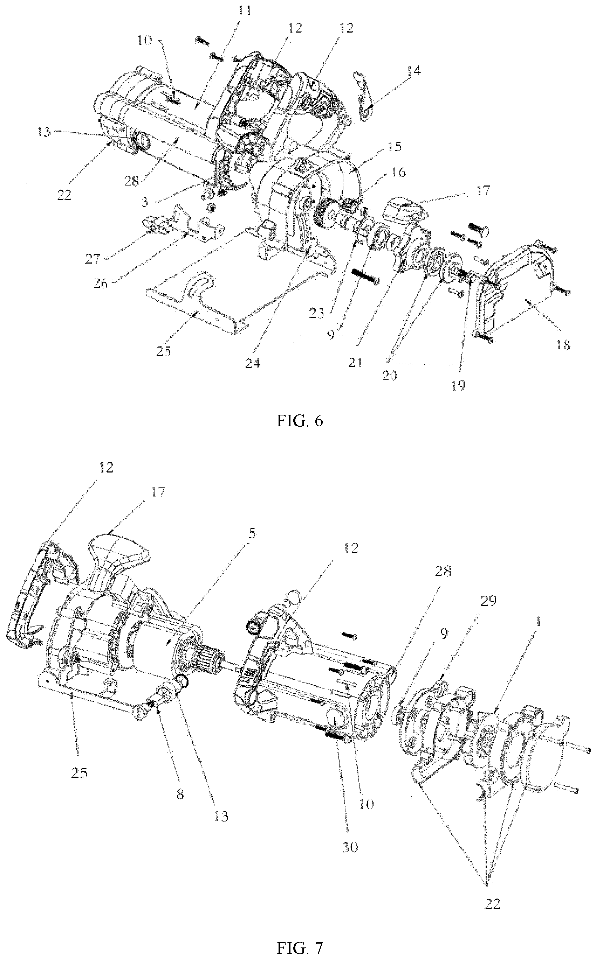

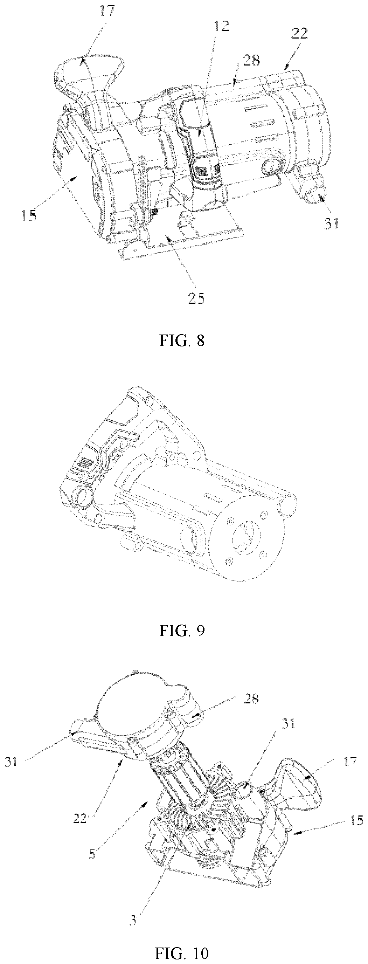

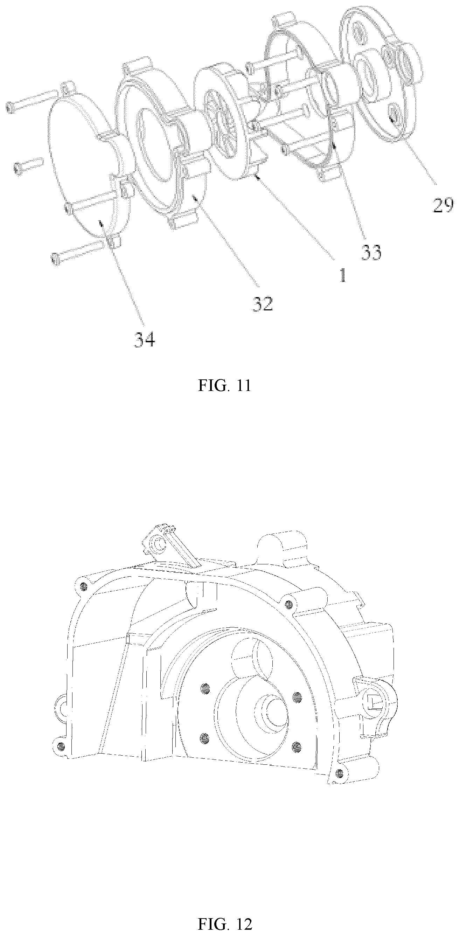

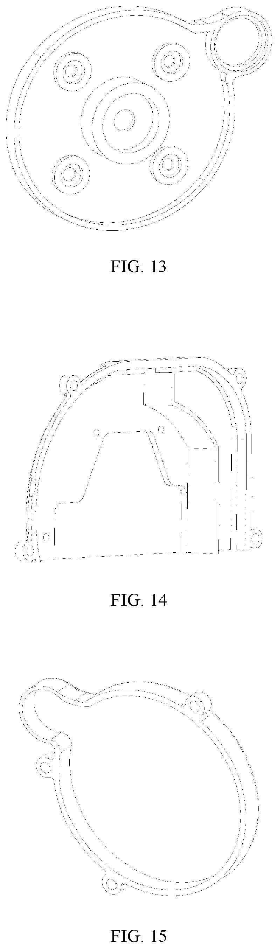

Referring to FIGS. 6-15, the present invention provides a fifth embodiment of cutting equipment, which includes a housing. The impeller assembly in the fourth embodiment is provided in the housing.

The housing includes a dust suction cavity 22, a motor cavity 11 and a cutting cavity 15. The rotor penetrates through the dust suction cavity 22, the motor cavity 11 and the cutting cavity 15. A drive motor 5 is provided in the motor cavity 11 and connected to the rotor to drive the rotor to rotate. The impeller assembly and a blade are provided on the rotor. The cutting cavity 15 includes a cutting opening, wherein a part of the blade is provided in the cutting cavity 15 and the other part is exposed out of the cutting opening for cutting an object.

The first impeller is provided in the dust suction cavity 22, the second impeller 3 is provided in the motor cavity 11, and the first impeller and the second impeller 3 are respectively provided on both sides of the motor 5 respectively, wherein the one on one side is used for forming a negative pressure to achieve a dust suction effect, and the other one on the other side is used for accelerating heat dissipation of the motor 5 to prolong the service life of the motor 5.

The rotor rotates to drive the blade to rotate for cutting, and drives the impeller assembly to rotate, thereby forming a wind force in the cavity, such that a negative pressure is formed at an end that the wind force points in the cavity, thereby forming a dust suction effect inside the cutting equipment. The cutting cavity 15 is communicated with the dust suction cavity 22 through a dust suction pipeline 28, for sucking cutting debris inside the cutting cavity 15. The cutting debris enters the dust suction pipeline from a dust suction opening 317 of the cutting cavity 15, then enters the dust suction cavity 22, leaves from the dust suction cavity 22 and is discharged from the dust suction cavity 22. When the object is cut by the blade, the generated dust and flying debris are sucked by the impeller assembly to prevent the dust and flying debris from being inhaled by a user to cause harms, and also to ensure a clean working environment of the cutting equipment. The blade is provided with saw teeth for accelerating the cutting efficiency.

A fixing plate 29 is provided between the motor cavity 11 and the impeller cavity. The fixing plate 29 is provided with a plurality of connecting members. A housing of the motor cavity 11, the fixing plate 29 and a housing of the impeller cavity are connected by the plurality of connecting members, such that a force transmission between the dust suction cavity 22 and the motor cavity 11 passes through the fixing plate 29, and is then reinforced by the fixing plate 29, thereby making the connection between the motor cavity 11 and the impeller cavity more stable. The fixing plate 29 is mainly in contact with bearings 9 in the motor cavity 11, and the motor 5 can be protected by stably protecting the bearings 9.

The fixing plate 29 has the same shape and size as those of a radial section of each of the motor cavity 11 and the impeller cavity. The fixing plate 29 includes a central opening area and a ring-shaped connecting area, wherein the rotor penetrates through the opening area, and the plurality of connecting members is provided on the connecting area, such that the force transmission between the dust suction cavity 22 and the motor cavity 11 is completely reinforced by the fixing plate 29, which further reduces the jitter and noise during the operation of the equipment.

The connecting area is full of four connecting members, which are equidistantly arranged, such that the force transmission between the dust suction cavity 22 and the motor cavity 11 is relatively uniform and stable.

The dust suction pipeline 28 is provided along the surface of the housing of the cutting equipment and passes through the fixing plate 29, such that the dust suction pipeline 28 is also fixed by the fixing plate 29 to prevent the dust suction pipeline 28 from jittering and generating noise.

A first handle 17 is provided on the housing of the cutting cavity 15. It is easier to apply a pressure to the ground or the wall by means of the first handle 17 during cutting, which is helpful for smooth cutting work. A second handle 12 is provided on the housing of the motor cavity 11, and arranged in a radial direction of the motor cavity 11. The second handle 12 is a main force-applying handle for being lift and hold by an operator. The first handle 17 is provided in a radial direction of the cutting cavity 15. The first handle 17 includes a supporting plate which faces the cutting opening. In the cutting process, a force may be applied to the first handle 17 by directly pressing the supporting plate, which is more convenient and user-friendly.

In the present embodiment, the second handle 12 only includes one holding member. However, in other embodiments, the second handle 12 may further include two holding members arranged in an axial direction, such that a left holding portion and a right holding portion are formed on the motor cavity 11. A distance between the two holding members is greater than 1/4 of an axial size of the motor cavity 11, which leads to a wide force-applying range and is convenient for the conversion in position and force-applying direction.

The housing of the motor cavity 11 is further provided with heat dissipating holes 10 for further heat dissipation.

The dust suction cavity 22 includes a dust suction cavity bottom plate 33 and a dust suction cavity cover plate 32. The first impeller is provided between the dust suction cavity bottom plate 33 and the dust suction cavity cover plate 32. Fixing blocks 20 are connected to the dust suction cavity bottom plate 33. A dust suction cavity sealing plate 34 is further provided at one end of the dust suction cavity 22. A cutting cavity cover plate 18 is provided at one end of the cutting cavity 15 for completing the integrity of the equipment. The cutting equipment further includes a mounting bottom plate 25 for supporting the cutting cavity 15 and the motor cavity 11.

Carbon brushes 8 are further provided on the rotor and arranged between the motor 5 and the second impeller 3 through a carbon brush holder 13. The two carbon brushes 8 are arranged to face to face on the rotor. The housing is further provided with carbon brush holes 30 through which the carbon brushes 8 are exposed out of the housing. The cutting equipment further includes a dust collection bag which is communicated with a dust suction opening 31 in the dust suction cavity 22. The dust and flying debris sucked by the impellers directly enter the dust collection bag. In addition, the dust collection bag is detachably connected to the dust suction cavity 22. The user can remove the dust collection bag for cleaning at any time.

A cutting depth adjusting module 24 and a cutting angle adjusting module 26 are further provided on the housing of the cutting cavity 15. The cutting depth adjusting module 24 includes a depth adjusting switch 14, and the cutting angle adjusting module 26 includes an angle adjusting switch 27. A cutting depth and a cutting angle of the blade can be adjusted by the cutting depth adjusting module 24 and the cutting angle adjusting module 26.

A gear set 16 is provided between the rotor and the blade. The gear set 16 includes a driving gear and a driven gear that mesh with each other. The driving gear is connected to the rotor, and the driven gear is connected to the blade through a force transmission shaft. A sliding key matched with the driving gear is provided on the rotor, and is fixedly connected to the driving gear through a thread. The motor 5 drives the rotor to rotate, and the rotor drives the driving gear to rotate. The force applied on the driving gear is transmitted to the driven gear by means of meshing, and the driven gear continues to transmit the force to the blade through the force transmission shaft, such that the blade rotates quickly and cuts the object.

The blade is fixed by a blade fixing block 21 and clamped and fixed by the two fixing blocks 20, so as to avoid a cutting error caused by its inclination. The two fixing blocks 20 are thin blocks, and are fixed by a fixing bolt 19.

Specifically, in the present embodiment, the driving gear and the driven gear are meshed by means of external gear meshing, and a gear radius of the driving gear is smaller than that of the driven gear, with a larger force transmission coefficient. In other embodiments, the driving gear and the driven gear may also be meshed by means of internal gear meshing, or a radius ratio between the driving gear and the driven gear is adjusted to obtain an optimal transmission ratio.

A second bearing 9 is further provided between the gear set 16 and the motor 5, and between the impeller and the motor 5. Each bearing 9 is set by a circlip 2328. When the motor 5 drives the rotor to operate at a high speed, the bearings 9 provide support and protection for the rotor.

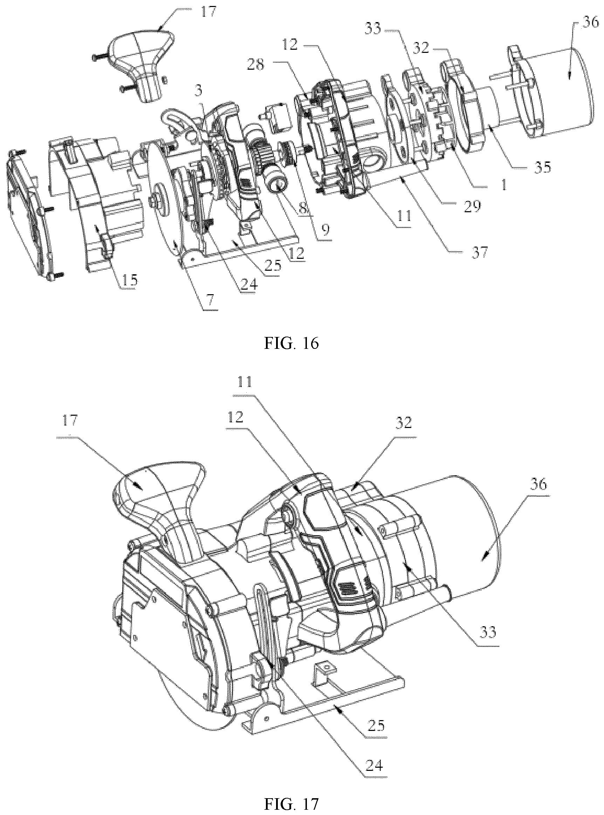

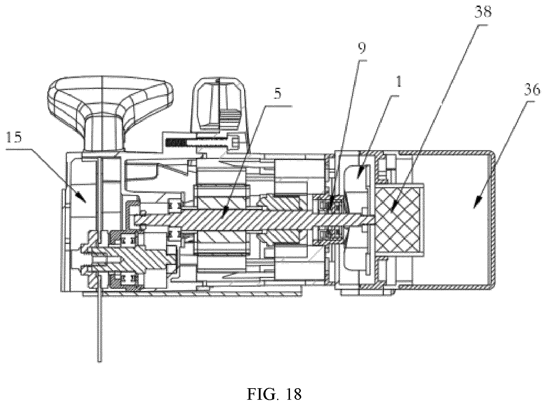

Referring to FIGS. 16-18, the present invention provides a sixth embodiment of cutting equipment, which includes a housing. The impeller assembly in the fourth embodiment is provided in the housing.

The housing includes a dust suction cavity 22, a motor cavity 11 and a cutting cavity 15. The rotor penetrates through the dust suction cavity 22, the motor cavity 11 and the cutting cavity 15. A drive motor 5 and a switch are provided in the motor cavity 11, and the drive motor 5 is connected to the rotor to drive the rotor to rotate. The impeller assembly and a saw blade 7 are provided on the rotor. The cutting cavity 15 includes a cutting opening, wherein a part of the saw blade 7 is provided in the cutting cavity 15 and the other part is exposed out of the cutting opening for cutting an object. The saw blade 7 placed in the cutting cavity 15 can be fully protected, thereby reducing the risk of safety accidents caused by the breakage of the saw blade 7.

The impeller assembly includes a first impeller and a second impeller 3, wherein the rotor sequentially passes through the center of the first impeller and the center of the second impeller 3 and is fixedly connected to the first impeller and the second impeller 3. The first impeller is provided in the dust suction cavity 22, and the second impeller 3 is provided in the motor cavity 11.

The rotor rotates to drive the saw blade 7 to rotate for cutting, and drives the impellers to rotate, thereby forming a wind force in the cavity, such that a negative pressure is formed at an end that the wind force points in the cavity, thereby forming a dust suction effect inside the cutting equipment.

The cutting cavity 15 is communicated with the dust suction cavity 22 through the dust suction pipeline 28, for sucking cutting debris inside the cutting cavity 15. The dust suction cavity 22 includes a dust suction opening 31 of the dust suction cavity 22 and a dust outlet of the dust suction cavity 22. The cutting cavity 15 includes a dust suction opening 31 of the cutting cavity 15. One end of the dust suction pipeline 28 is connected to the dust suction opening 31 of the cutting cavity 15, and the other end of the dust suction pipeline 28 is connected to the dust suction opening 31 of the dust suction cavity 22. The cutting debris will enter the dust suction pipeline from the dust suction opening 31 of the cutting cavity 15, then enter the dust suction cavity 22 from the dust suction opening 31 of the dust suction cavity 22, and enter the dust collection channel through the dust outlet of the dust suction cavity 22 and is then discharged. When an object is cut by the saw blade 7, the generated dust and flying debris are sucked by the first impeller to prevent the dust and flying debris from being inhaled by a user to cause harms, and also to ensure a clean working environment of the cutting equipment.

The dust suction cavity further includes a dust collection channel used for collecting dust generated in the cutting process. The dust collection channel is detachably provided on a side of the dust suction cavity 22 away from the cutting cavity 15. A filter screen 38 is provided inside the dust collection channel. Air sucked from the cutting cavity 15 is discharged through the dust collection channel, while the dust is blocked by the filter screen 38 and stays in the dust collection channel.

When a cutting machine is operating, the motor 5 drives the first impeller to rotate, generating a negative pressure suction force. Dust will enter the dust suction pipeline 28 from the dust suction opening 31 of the dust suction cavity 22. The dust suction pipeline 28 is connected to an air inlet of the dust collection channel, and air with dust enters the dust collection channel. The filter screen 38 is mounted in the dust collection channel to prevent dust particles from entering the dust collection cavity.

In another preferred embodiment based on this embodiment, the dust collection channel may also be provided on the dust suction pipeline 28.

The cutting machine which is in operation produces polluted air with dust and generates a suction force through the first impeller, and the air will flow from the cutting cavity 15 to the dust collection channel, and then be removed through the filter screen 38, wherein the dust will remain on the filter screen 38 when passing through the dust collection channel, and the filtered and purified air will be discharged.

The dust suction cavity 22 is an accommodating space formed by the combination of two wall plates of the dust suction cavity 22. The dust collection channel includes a dust collection portion 35 and an air outlet portion 36. The dust collection portion 35 is arranged between the dust suction cavity 22 and the air outlet portion 36, and the filter screen 38 is provided in the dust collection portion 35.

Air sucked from the cutting cavity 15 passes through the dust collection portion 35 and is discharged from the air outlet portion 36, while dust is blocked by the filter screen 38 and stays in the dust collection portion 35.

The dust collection portion 35 is detachably connected to the dust suction cavity 22. When a large amount of dust adheres to the filter screen 38, the dust collection portion 35 can be removed for cleaning.

The volume of the dust collection portion 35 is affected by the power of the motor 5, and the larger the power of the motor 5 is, the larger the volume of the dust collection portion 35 will be.

A fixing plate 29 is provided between the motor cavity 11 and the dust suction cavity 22. The fixing plate 29 is provided with a plurality of connecting members. The housing of the motor cavity 11, the fixing plate 29 and the housing of the impeller cavity 22 are connected by the plurality of connecting members, such that a force transmission between the dust suction cavity 22 and the motor cavity 11 passes through the fixing plate 29, and is then reinforced by the fixing plate 29, thereby making the connection between the motor cavity 11 and the dust suction cavity 22 more stable. The fixing plate 29 is mainly in contact with bearings 9 in the motor cavity 11, and the motor 5 can be protected by stably protecting the bearings 9.

The fixing plate 29 has the same shape and size as those of a radial section of each of the motor cavity 11 and the dust suction cavity 22. The fixing plate 29 includes a central opening area and a ring-shaped connecting area, wherein the rotor passes through the opening area, and the plurality of connecting members is provided on the connecting area, such that the force transmission between the dust suction cavity 22 and the motor cavity 11 is completely reinforced by the fixing plate 29, which further reduces the jitter and noise during the operation of the equipment.

The housing of the motor cavity 11 is also provided with a plurality of heat dissipating holes 10 in a circumferential direction. The positions of the plurality of heat dissipating holes 10 correspond to the position of the first impeller. Air can enter the machine body through the heat dissipating holes 10 of the motor 5 to dissipate the heat of the motor 5.

The drive motor 5 is connected to a power source. The power source includes an external power line 42 and a built-in battery.

The power source is an external power source, including an external power line 42, wherein a power line 42 sleeve 37 is provided outside the external power line 42. In another preferred embodiment based on this embodiment, a lithium battery power source may also be provided separately or together with the external power line 42, such that the equipment can either have its own power source or be plugged into and powered by the external power source.

The dust suction pipeline 28 is provided along the surface of the housing of the cutting equipment and passes through the fixing plate 29, such that the dust suction pipeline 28 is also fixed by the fixing plate 29 to prevent the dust suction pipeline 28 from greatly jittering and generating noise. The cutting equipment further includes a bottom plate for a supporting purpose.

A first handle 17 is provided on the housing of the cutting cavity 15. It is easier to apply a pressure to the ground or the wall by means of the first handle 17 during cutting, which is helpful for smooth cutting work. The first handle 17 is provided in a radial direction of the cutting cavity 15. The first handle 17 includes a supporting plate which faces the cutting opening. In the cutting process, a force may be applied to the first handle 17 by directly pressing the supporting plate, which is more convenient and user-friendly.

A second handle 12 is provided on the housing of the motor cavity 11, and arranged in a radial direction of the motor cavity 11, and both ends of the second handle 12 are provided on the housing of the motor cavity 11. The second handle 12 is a main force-applying handle for being lift and hold by the operator.

The second handle 12 only includes one holding member. In another preferred embodiment based on this embodiment, the second handle 12 may further include two holding members arranged in an axial direction, such that a left holding portion and a right holding portion are formed on the motor cavity 11. A distance between the two holding members is greater than 1/4 of an axial size of the motor cavity 11, which leads to a wide force-applying range and is convenient for the conversion in position and force-applying direction.

Preferably, carbon brushes 8 are further provided on the rotor, and are arranged in the motor cavity 11. The two carbon brushes 8 are arranged to face to face on the rotor. The housing is further provided with carbon brush holes 30 through which the carbon brushes 8 are exposed out of the housing.

A cutting depth adjusting module 24 and a cutting angle adjusting module 26 are further provided on the housing of the cutting cavity 15. The cutting depth adjusting module 24 includes a depth adjusting switch 14, and the cutting angle adjusting module 26 includes an angle adjusting switch 27. A cutting depth and a cutting angle of the saw blade 7 can be adjusted by the cutting depth adjusting module 24 and the cutting angle adjusting module 26.

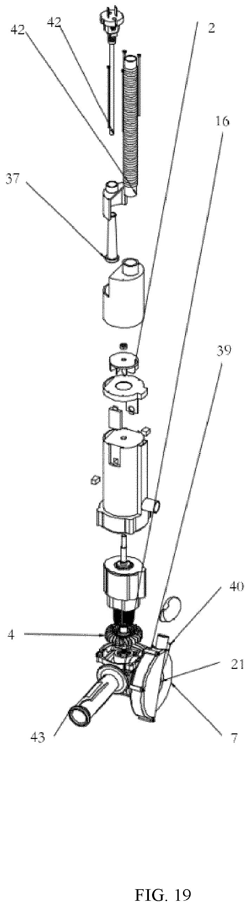

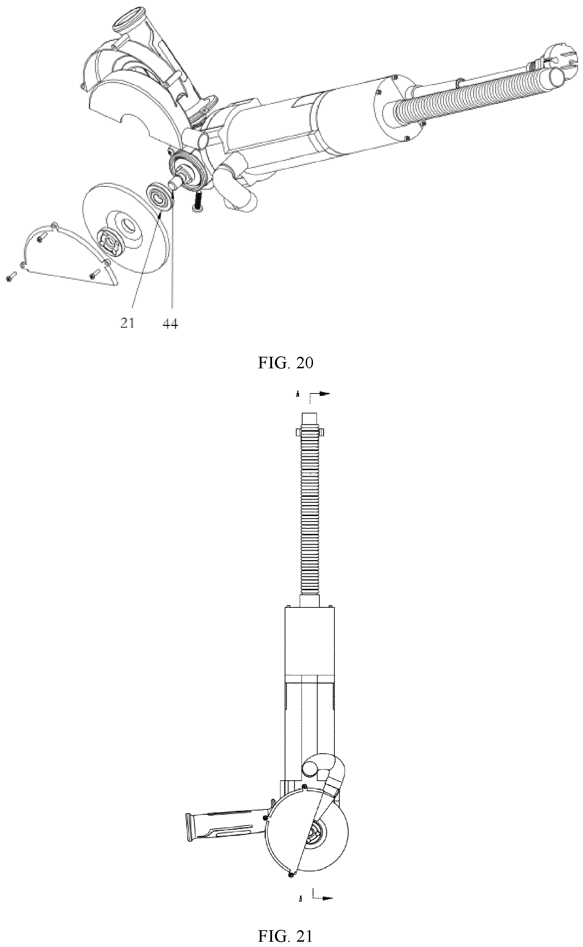

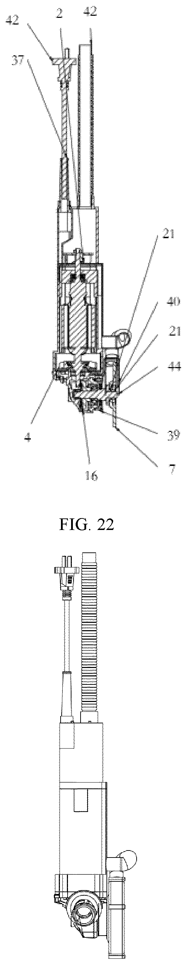

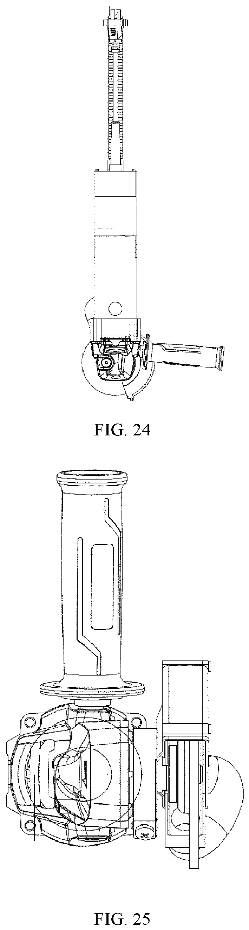

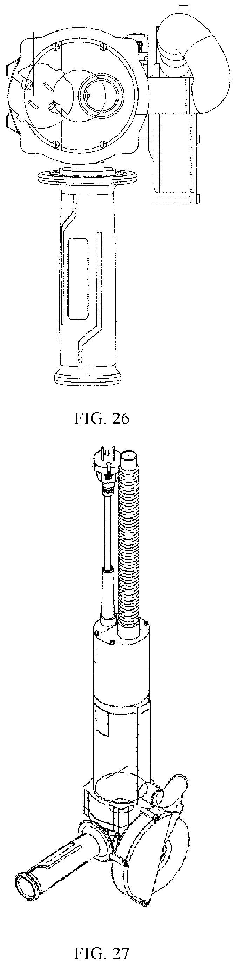

Referring to FIGS. 19-27, the present invention provides a seventh embodiment of cutting equipment. This embodiment is an angle grinder in the cutting equipment. The angle grinder includes a housing. The impeller assembly in the third embodiment is provided in the housing.

The housing includes a dust suction cavity 22, a motor cavity 11 and a cutting cavity 15. A rotor penetrates through the dust suction cavity 22, the motor cavity 11 and the cutting cavity 15. A drive motor 5 is provided in the motor cavity 11, and connected to the rotor to drive the rotor to rotate. The first impeller is provided on the rotor and arranged in the dust suction cavity 22. The rotor rotates to drive the first impeller to form a negative pressure inside the dust suction cavity 22. A dust outlet is formed in the dust suction cavity 22. The rotor rotates to drive the impeller assembly to rotate, thereby forming a wind force in the cavity, such that a negative pressure is formed at an end that the wind force points in the cavity, thereby forming a dust suction effect inside the angle grinder.

The first impeller includes a first impeller body 2 and first vanes 2. The first vanes 2 are equidistantly arranged on the first impeller body in a circumferential direction. The first vanes 3 are arc-shaped vanes. When the rotor rotates, the first impeller sucks surrounding air and circulates it along the radial direction of the rotor, thereby forming a negative pressure inside the dust suction cavity 22.

A second impeller 3 is also provided on the rotor. The second impeller 3 includes a second impeller body 3 and second vanes 4, wherein the second vanes 4 are equivalently arranged on the second impeller 3 in a circumferential direction. When the second vanes 4 are arranged linearly, a contact area between the rotor and air is increased by means of the connection of the plurality of second vanes 4, the second impeller body 3 and the rotor. The second vanes 4 are provided on both sides of the second impeller 3. However, in other embodiments, in order to save a space, it is also possible to provide the second vanes 4 on one side of the second impeller 3.

Each of the cutting cavity 15 and the motor cavity 11 is provided with an air inlet. The air inlet of the cutting cavity 15 and the air inlet of the motor cavity 11 are connected together by using the dust suction pipeline 28, thereby ensuring the sealing between the cutting cavity 15 and the motor cavity 11.

The cutting cavity 15 is communicated with the motor cavity 11 through a dust suction pipeline 28. The cutting debris in the cutting cavity 15 sequentially flows through the dust suction pipeline 28 and the motor cavity 11, enters the dust suction cavity 22 and is discharged from the dust outlet. When an object is ground by the angle grinder, the dust and flying debris generated in the cutting cavity 15 are sucked by the first impeller, which can remove more than 95% of the dust particles generated during the cutting process, and prevent the dust and flying debris from being inhaled by the user to cause harms, thereby solving the problem of air pollution caused by the dust particles generated during the production process, improving a working environment of workers and ensuring their physical health.

Preferably, the cutting cavity 15 includes a protective cover and a saw blade 7 provided in the protective cover. The saw blade 7 is fixed by pressing plates on both sides. The protective cover is provided with a cutting opening, wherein a part of the saw blade 7 is provided in the protective cover, and the other part of the saw blade 7 is exposed outside the cutting opening for cutting the object.

The protective cover includes a first protective portion 39 and a second protective portion 40, wherein the first protection portion 39 is semicircular and sleeves the saw blade 7; and the second protective portion 40 is movably connected to the first protective portion 39, and the second protective portion 40 rotates in a circumferential direction of the saw blade 7 relative to the first protective portion 39 to change an overlap area between the first protective portion 39 and the second protective portion 40, thereby changing a size of the cutting opening, and further improving a position and size of the saw blade 7 that is exposed out of the protective cover.

For example, the exposed part of the saw blade 7 may be 180 degrees, 90 degrees or 270 degrees, or any angle between 90 degrees and 270 degrees due to the rotation of the second protective portion 40, so as to adapt to the heights and usage habits of different operators.

When the size of the protective cover becomes larger due to the rotation of the second protective portion 40, a protection area of the grinder can be made larger and more comprehensive, and the dust generated by the work can be better collected.

One end of the dust suction pipeline 28 is provided on the second protective portion 40. The dust suction pipeline 28 is driven to be displaced during the rotation of the second protective portion 40. Therefore, the dust suction pipeline 28 is set as a curved and flexible pipeline, so that the second protective portion 40 rotates to drive one end of the dust suction pipeline 28 to move.

Generally, the curved and flexible dust suction pipeline 28 is made of a plastic material, but it is not limited to this.

In another preferred embodiment based on this embodiment, the dust suction pipeline 28 may also be a telescopic pipeline, and the second protective portion 40 rotates to directly change the size of the dust suction pipeline 28 so as to adapt to the displacement.

The protective cover includes an axial mounting surface and a radial mounting surface. The axial mounting surface and the radial mounting surface are adjustably connected through an adjusting member to change an axial thickness of the protective cover. The adjusting member is generally a bolt, and the thickness of the protective cover can be changed by changing a mounting depth of the bolt so as to accommodate saw blades 7 with different thicknesses, such that the cutting equipment of the present invention may be used as a cutting machine or an angle grinder.

In another preferred embodiment based on this embodiment, the protective cover includes a first protective cover and a second protective cover, wherein an axial thickness of the first protective cover is greater than that of the second protective cover. The saw blade 7 includes a first saw blade 7 and a second saw blade 7. An axial thickness of the first saw blade 7 is greater than that of the second saw blade 7. The first protective cover, the second protective cover, the first saw blade 7, and the second saw blade 7 are all detachable members. When the cutting equipment provided by the present invention is used as a cutting machine, the second protective cover is mounted in conjunction with the second saw blade 7. When the cutting equipment is used as an angle grinder, the first protective cover is mounted in conjunction with the first saw blade 7.

Preferably, the saw blade 7 is fixed on a rotating shaft 44, the rotating shaft 44 being connected to the rotor through a gear set 168. The rotor rotates to drive the rotating shaft 44 to rotate, thereby driving the saw blade 7 to grind an object.

When the rotating shaft 44 and the rotor are arranged vertically, a worm gear is adopted as a transmission member to realize the transmission of forces in different directions.

In another preferred embodiment based on this embodiment, the rotating shaft 44 and the rotor may also be arranged in parallel. More preferably, the rotating shaft 44 is coaxial with the rotor, which can achieve a better transmission effect.

A third handle 43 may also be included for an operator to hold the grinder with hands. The third handle 43 and the rotating shaft 44 are arranged vertically, such that the gripping force is more stable.

In another preferred embodiment based on this embodiment, the third handle 43 may also be provided to be parallel to the rotating shaft 44, so as to adapt to different scene requirements.

The dust outlet facing a cutting portion adopts an open design, and a dust collection container may be connected and mounted to the outside of the dust outlet, the dust collection container including but not limited to a dust collection bag, a dust collection box, or the like. The dust outlet is usually in a form of a dust outlet pipe 41, and a dust collection bag or dust collection box is directly connected to the dust outlet pipe 41.

A power line 42 is also connected to the drive motor 5 and connected with an electric plug for supplying power to the drive motor 5. A protective sleeve for the power line 42 is provided outside the power line 42 and is connected to the motor cavity 11 for ensuring the safety of electricity use.

In another preferred embodiment based on this embodiment, a lithium battery may also be used to power the drive motor 5, which is not limited here.

It should be noted that the embodiments of the present invention have better implementation and are not intended to limit the present invention in any form. A person skilled in the art may change or modify the disclosed technical content into equivalent effective embodiments. However, without departing from the content of the technical solution of the present invention, any amendments or equivalent changes and modifications made to the above embodiments based on the technical essence of the present invention still fall within the scope of the technical solution of the present invention.

## Claims

1. An impeller assembly, which is provided on a rotor, wherein the impeller assembly comprises a first impeller and a second impeller; the rotor sequentially passes through the center of the first impeller and the center of the second impeller and is fixedly connected to the first impeller and the second impeller; a plurality of first vanes is convexly provided on the first impeller, and arranged in a circumferential direction of the rotor; a plurality of second vanes is provided on the second impeller and arranged in a circumferential direction of the rotor;
each first vane comprises an inner vane segment and an outer vane segment that are connected, wherein a distance from a protrusion on the first impeller to the first impeller is a height of the vane, and a vane height of the outer vane segment is greater than a vane height of the inner vane segment; and
when the rotor rotates, the first impeller sucks a radial circulation of ambient air along the rotor, and a contact area between the rotor and air is increased by the connection of the plurality of the second vanes and the rotor.

2. The impeller assembly according to claim 1, wherein a circle formed by the inner vane segments on the first impeller has a diameter of Φ₁, and the first impeller has a diameter of Φ₂, where 1/8Φ₂≤Φ₁≤7/8Φ₂.

3. The impeller assembly according to claim 1 or 2, wherein the vane heights of the outer vane segments are the same, the vane heights of the inner vane segments gradually decrease in a direction facing the rotor, and an angle β between a connecting line from a highest point to a lowest point of each inner vane segment and the first impeller is: 15°<β<75°.

4. The impeller assembly according to any one of claims 1 to 3, wherein a vane height of each outer vane segment is H, where 5cm≤H≤1/3Φ₂, or 5cm≤H≤25cm.

5. The impeller assembly according to any one of claims 1 to 4, wherein each first vane has a circular arc shape or a spiral shape; when the first vane has the circular arc shape, a connecting line between a tangent line of the first vane and the center of the first impeller is a vane tangent line, a connecting line between the distal end of the first vane and the center of the first impeller is a reference line, and an included angle α between the vane tangent line and the reference line is: 5°≤α≤60°.

6. The impeller assembly according to any one of claims 1 to 5, wherein each second vane has a linear shape or a circular arc shape or a spiral shape; and when the second vane has the linear shape, a radial length of the second vane along the second impeller is 1/10-1 of the radius of the second impeller.

7. The impeller assembly according to any one of claims 1 to 6, wherein each first vane and the first impeller, and each second vane and the second impeller are arranged vertically or non-vertically; and
when they are arranged non-vertically, a mounting angle β1 between the first vane and the first impeller is: 60°<β≤90°; and a mounting angle β2 between the second vane and the second impeller is: 45°≤β2<90°.

8. The impeller assembly according to any one of claims 1 to 7, wherein each of the first impeller and the second impeller is provided with ventilation openings;
each ventilation opening is ring-shaped, and the ring-shaped ventilation openings are concentric with the wheel disc; each of the first impeller and the second impeller is divided into a central disc and an outer ring disc, wherein the distal end of the vane is provided on the outer ring disc; and
an inner diameter of the outer ring disc is Ri, and a diameter of each of the first impeller and the second impeller is R₂, where R₁≦3/4R₂.

9. The impeller assembly according to claim 8, wherein a height H of each vane is: 1/8R₂ ≦H≦1/3R₂, and a height of the vane at the proximal end is smaller than the height of the vane at the distal end.

10. Cutting equipment, comprising a housing, wherein the impeller assembly according to any one of claims 1 to 9 is provided in the housing.

11. The cutting equipment according to claim 10, comprising a dust suction cavity, a motor cavity and a cutting cavity, wherein the rotor penetrates through the dust suction cavity, the motor cavity and the cutting cavity; a drive motor is provided in the motor cavity, and is connected to the rotor to drive the rotor to rotate;
the first impeller is provided in the dust suction cavity, the second impeller is provided in the motor cavity, and the first impeller and the second impeller are respectively provided on both sides or the same side of the motor;
the rotor rotates to drive the impeller assembly to rotate so as to form a negative pressure in the dust suction cavity, and the cutting cavity is communicated with the dust suction cavity through a dust suction pipeline; and
a dust collection channel is detachably connected to a side of the dust suction cavity away from the cutting cavity, or to the dust suction pipeline; a filter screen is provided in the dust collection channel; air sucked from the cutting cavity is discharged through the dust collection channel, while dust is blocked by the filter screen and stays in the dust collection channel.

12. The cutting equipment according to claim 10 or 11, wherein the dust collection channel comprises a dust collection space and an air outlet space, wherein the dust collection space is provided between the dust suction cavity and the air outlet space, and the filter screen is provided in the dust collection space; the dust collection space is detachably connected to the dust suction cavity; and
air sucked from the cutting cavity passes through the dust collection space and is discharged from the air outlet space, while dust is blocked by the filter screen and stays in the dust collection space.

13. The cutting equipment according to any one of claims 10 to 12, wherein a fixing plate is provided between the motor cavity and the dust suction cavity, and a plurality of connecting members is provided on the fixing plate; and a housing of the motor cavity, the fixing plate and a housing of the dust suction cavity are connected by the plurality of the connecting members; and
the fixing plate has the same shape and size as those of a radial section of each the motor cavity and the dust suction cavity; and
the fixing plate comprises a central opening area and a ring-shaped connecting area, wherein the opening area penetrates through the rotor, and the plurality of the connecting pieces is equidistantly provided on the connecting area in a circumferential direction.

14. The cutting equipment according to any one of claims 10 to 13, wherein the cutting cavity comprises a protective cover and a saw blade provided in the protective cover; the protective cover is provided with a cutting opening, wherein a part of the saw blade is provided in the protective cover, and the other part of the saw blade is exposed outside the cutting opening; and
the protective cover comprises a first protective portion and a second protective portion, wherein the second protective portion is movably connected to the first protective portion, and the second protective portion rotates in a circumferential direction of the saw blade relative to the first protective portion to change an overlap area between the first protective portion and the second protective portion, thereby changing a size of the cutting opening.

15. The cutting equipment according to claim 14, wherein the protective cover comprises an axial mounting surface and a radial mounting surface; and the axial mounting surface and the radial mounting surface are adjustably connected through an adjusting member to change an axial thickness of the protective cover.
